Europäisches Patentamt

European Patent Office

Office européen des brevets

(19)

(11) Publication number: **0 450 890 A2**

# (12) EUROPEAN PATENT APPLICATION

(21) Application number: **91302830.4**

(22) Date of filing: **28.03.91**

(51) Int. Cl.⁵: **G06F 15/80**

(30) Priority: **31.03.90 JP 85649/90**

(43) Date of publication of application:
**09.10.91 Bulletin 91/41**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken Tokyo (JP)**

(72) Inventor: **Suzuoka, Takashi, c/o Intellectual**
**Pty. Division**
**Toshiba Corporation, 1-1-1 Shibaura**
**Minato-ku, Tokyo (JP)**

(74) Representative: **BATCHELLOR, KIRK & CO.**
**2 Pear Tree Court Farringdon Road**
**London EC1R 0DS (GB)**

(54) **Neural network processing method and apparatus.**

(57) A neural network processing method and apparatus interconnects a plurality of artificial neurons (11) and sets a weight between the artificial neurons according to the instruction image pattern. If the number of artificial neurons generating the maximum output value is expected to be smaller than the number of the artificial neurons generating the minimum output value, the function f, which is defined as $(f(x) > -f(-x))$ for a positive value x, is set for each artificial neuron. If the number of the artificial neurons generating the maximum output value is expected to be larger than the number of the artificial neurons for generating the minimum output value, another function f, which is defined as $(f(x) < -f(-x))$ for a positive value x, is set for each artificial neuron. Then, the external input signals are supplied to the artificial neurons according to the unknown image pattern. The artificial neurons are activated to enter the input signal as a weighted sum of the other artificial neuron's output signal and corresponding weight between artificial neurons, and to generate the output signal. Therefore, when the neural network is in a stable state, the output signals of the artificial neurons correspond to the associated image pattern as for the unknown image pattern.

EP 0 450 890 A2

Fig. 8.

<u>Field of the Invention:</u>

The present invention relates to a neural network processing method and apparatus which effectively solves the association problem.

<u>Background of the Invention:</u>

A neural network is constructed of a plurality of artificial neurons. The association problem (described below) is effectively solved by the neural network. For example, in a Hopfield model of a general neural network, a artificial neuron is connected to receive another artificial neuron's output signal. The artificial neuron determines its output value and supplies the output value to other connected artificial neurons to solve the association problem.

The Hopfield model is explained below. The Hopfield model formula is defined as follows:

$$O_j^{t+1} = f(net_j^{t+1})$$
$$net_j^{t+1} = \delta(\Sigma W_{ji} O_i^t + I_j^t)$$
$$+ (1-\delta) net_j^t$$

$$(1)$$

N:     the number of all artificial neurons;
$O_i$:     the output value of artifical neuron i;
$W_{ji}$:     the weight between artificial neuron i and artificial neuron j;
$I_j$:     the external input value of the artificial neuron j;
$O_j$:     the output value of artificial neuron j;
f:     monotonic increment function; and
δ:     constant (0<δ<1).

If two artificial neurons have a tendency to generate the same expected output value, the two artificial neurons are connected by a link of positive value. If two artificial neurons have a tendency to generate different expected output values, the two artificial neurons are connected by a link of negative value.

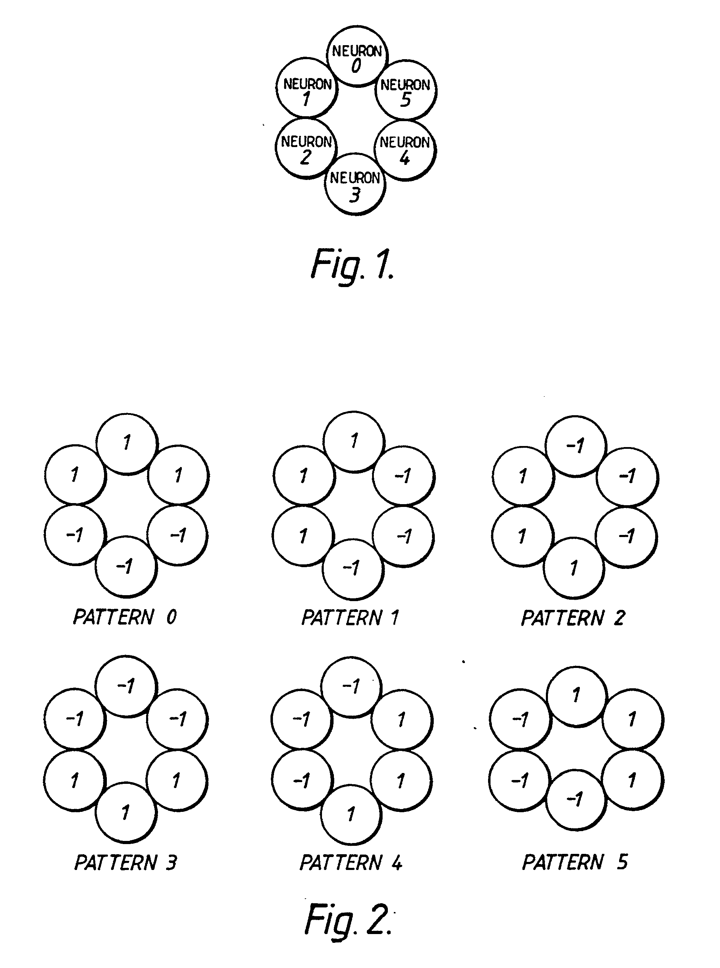

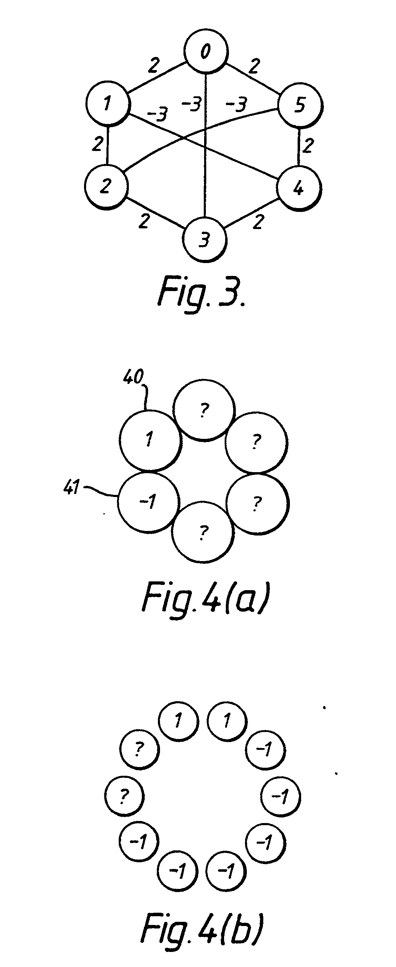

The following discussion describes the association problem. Assume, for example, as shown in Figure 1, that six artificial neurons are respectively assigned to six pixels of the image pattern. In this case, there are six variations of the image pattern, which is composed of three consecutive black pixels and three consecutive white pixels, as shown in Figure 2. In Fig. 2, the black pixels are represented by a "1" circle and the white pixels are represented by a "-1" circle. The variation of the image pattern is determined by the position of the black pixels and the white pixels. A neural net should be able to recognize each of the six variations. For memorizing the six variations of the image pattern, the weight is set between the artificial neurons as shown in Figure 3. A positive weight of "2" is set between neighboring artificial neurons, because the neighboring pixels have a tendency to be the same color (a black pixels or a white pixels). A negative weight "-3" is set between facing opposite artificial neurons. The faxing pixels have a tendency to be a different color (black pixel and white pixel). Thus, the absolute value of the negative weight "-3" is larger than that of the positive weight "2", because the tendency to be a different color of pixel for the facing pixels is stronger than the tendency to be the same color of pixel for the neighboring pixels.

Figure 4(a) shows an unknown image data, in which the value of the pixel 40 is "1", the value of the pixel 42 is "-1", and the value of the other pixels is unknown. This image pattern is supplied to the artificial neurons and the artificial neurons decide whether it is an image pattern they recognize. First, initial values $O_i(0 \le i \le 5)$ of the artificial neurons corresponding to the pixels are set as follows:

$$O_0 = O_1 = O_2 = O_3 = O_4 = O_5 = 0$$

Second, the external input value of each artificial neuron is set as follows:

$$I_1 = 1, I_2 = -1, I_0 = I_3 = I_4 = I_5 = 0$$

Then the signals are transmitted between the artificial neurons according to the external input signal. When the output values of the artificial neurons are substantially unchanging, the neural network enters a stable state. In this case, the output value $O_i(0 \le i \le 5)$ of the artificial neurons is as follows:

$$O_0 = O_1 = O_5 = 1$$
$$O_2 = O_3 = O_4 = -1$$

In this case, the unknown image pattern is the pattern 0 as shown in Figure 2. In short, in conventional neural nets, if half of the output values of all artificial neurons are expected to be a maximum value (=1) and the other half of the output values are expected to be a minimum value (= -1), the neural network can associate correctly.

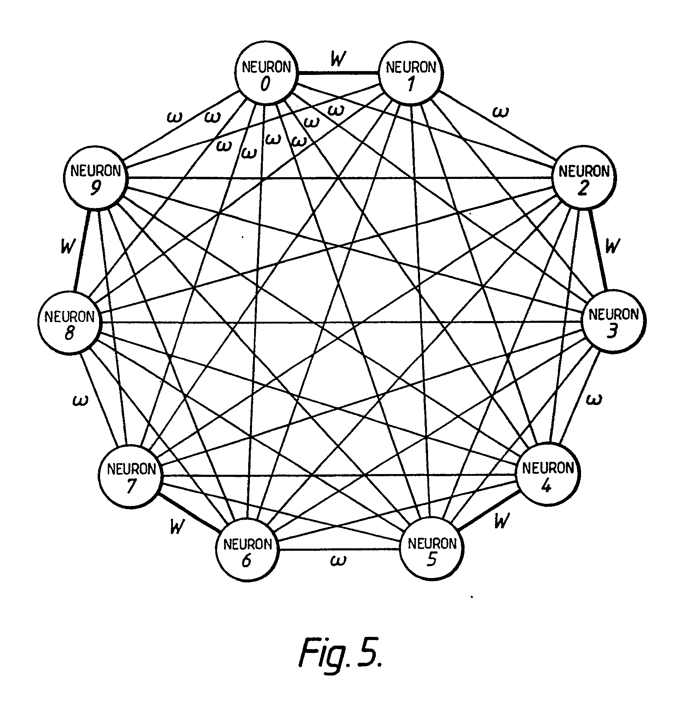

But, in conventional systems, if the number of the artificial neurons for generating the maximum value is expected to be smaller than the number of the artificial neurons for generating the minimum value, the neural network cannot associate correctly. Figure 5 shows another neural network of ten artificial neurons. The ten artificial neurons are composed of five groups of two artificial neurons (artificial neuron 0 and artificial neuron 1, artificial neuron 2 and artificial neuron 3, . . ., artificial neuron 8 and artificial neuron 9). In the neural network, the output value of two artificial neurons belonging to one group is expected to be the maximum value and the output value of eight artificial neurons belonging to other four groups is expected to be the minimum value. Thus, in the example, two adjacent pixels of the pattern recognized by the neural net are black, and the rest are white. A positive weight W is set between the artificial neurons belonging to the same group and a negative weight w is set between the artificial neurons belonging to the different groups. Accordingly, when the output value of one artificial neuron in a group is near the maximum value, the output value of the other artificial neuron in the group is near the maximum value by the positive weight. When the output value of the artificial neurons in a group is near the maximum value, the output value of the artificial neurons in the other groups is near the minimum value by the negative weight. In the same way, when the output value of one artificial neuron in a group is near the minimum value, the output value of the other artificial neuron in the group is near the minimum value by the positive weight. And when the output value of the artificial neurons in a group is near the minimum value, the output value of the artificial neurons in the other groups is near the maximum value by the negative weight.

This discussion assumes that the output values of the artificial neurons 8 and 9 are unknown (because of noise, etc.), the output values of the artificial neurons 0 and 1 are the maximum value, and the output values of the other artificial neurons are the minimum value as shown in Figure 4(b). The initial value $O_i$ and the external input value $I_j$ is set for each artificial neuron as follows.

$$O_0 = O_1 = O_H ( = 1)$$
$$O_2 = O_3 = O_4 = O_5 = O_6 = O_7 = O_L = ( = -1)$$
$$O_8 = O_9 = 0$$
$$I_j = 0 \ (0 \leqq j \leqq 9)$$

where $O_H$ is a maximum value (1) and $O_L$ is a minimum value (-1). When the neural network enters a stable state, the output values of each artificial neuron are as follows:

$$O_0 = O_1 = O_8 = O_9 = 1$$
$$O_2 = O_3 = O_4 = O_5 = O_6 = O_7 = -1$$

An internal value of the artificial neuron 9 is calculated by the formula (1) as follows (see also formula (1)):

$$net_9^{t+1} = \delta (\Sigma W_{9i} O_i^{t})$$
$$+ (1-\delta) \ net_9^{t}$$
$$\Sigma W_{9i} O_j^{0} = 2wO_H + 6wO_L + WO_8$$

$$= 2w . 1 + 6w . (-1) + W . (0)$$
$$= -4w > 0$$

Therefore, the value of $net_9^1$ is positive and becomes larger step by step. In proportion to $net_9^1$, as the net stabilizes, the output value $O_9^t$ becomes larger and finally it is "1." The output value of the artificial neuron 8 also increases to "1" in a similar fashion. The above fact is contrary to the predetermined condition that only the output values of two artificial neurons belonging to one group are "1". (In the example, the output values of artificial neurons 0, 1, 8, and 9 are "1") In short, if the difference between the number of the artificial neurons expected to generate a maximum value and the number of the artificial neurons expected to generate a minimum value is large, a conventional neural network cannot associate correctly.

## SUMMARY OF THE INVENTION

Accordingly, it is one object of the present invention to provide a neural network processing method and apparatus which can associate correctly if the difference between the number of the artificial neurons expected to generate a maximum value and the number of the artificial neurons expected to generate a minimum value is large.

These and other objects of the present invention are accomplished by setting the function f, which is defined

4

as $(f(x)>-f(-x))$ for positive value x of the input signal, for each artificial neuron, if the number of the artificial neurons generating the maximum output value is expected to be smaller than the number of artificial neurons generating the minimum output value. The objects are accomplished by setting the function f, which is defined as $(f(x)<-f(-x))$ for positive value x of the input signal, for each artificial neuron, if the number of artificial neurons generating the maximum output value is expected to be larger than the number of artificial neurons generating the minimum output value.

BRIEF DESCRIPTION OF THE DRAWING

Figure 1 shows an example of the artificial neurons corresponding to pixels in a neural net that recognizes an image pattern composed of pixels;
Figure 2 shows variations of the image pattern of Figure 1;
Figure 3 shows an example of weights set between the artificial neurons of Figure 1;
Figures 4(a) and 4(b) each show an example of an unknown variation of image data;
Figure 5 shows an example of a neural network in which a number of the artificial neurons for generating a maximum value is expected to be smaller than a number of the artificial neurons for generating a minimum value;
Figures 6(a) through 6(c) each show a function according to the present invention;
Figures 7(a) and 7(b) each show another example of a function according to the present invention;
Figure 8 shows a block diagram of a neural network processing apparatus according to the present invention;
Figure 9 shows an example of an instruction image pattern;
Figure 10(a) and 10(b) show examples of a concentration relation of the instruction image pattern;
Figure 11 shows an example of a weight set of the artificial neurons corresponding to the instruction image pattern of Fig. 10;
Figure 12 shows an example of selected pixels of the instruction image pattern of Fig. 10;
Figure 13 shows an example of a match situation between the associated image pattern and the instruction image pattern; and
Figure 14(a) and 14(b) each show a flow chart describing processing by a neural network according to the present invention.

DESCRIPTION OF THE PREFERRED EMBODIMENTS

The present invention is explained below with relation to a case where the number of the artificial neurons generating the maximum value $0_H(>0)$ is expected to be smaller than the number of the artificial neurons generating the minimum value of $0_L(<0)$, as shown in Figure 5.

The formula (1) assumes that $I_j=0$ (non-external input value) and $\delta=1$ (steady-state). The formula (1) is represented as follows.

$$net_j^{t+1} = \Sigma W_{ji} O_i^{t}$$
$$O_j^{t+1} = fj \ (\Sigma W_{ji} O_i^{t}) \qquad (2)$$

$$(fj: \ \text{monotonic increment function})$$

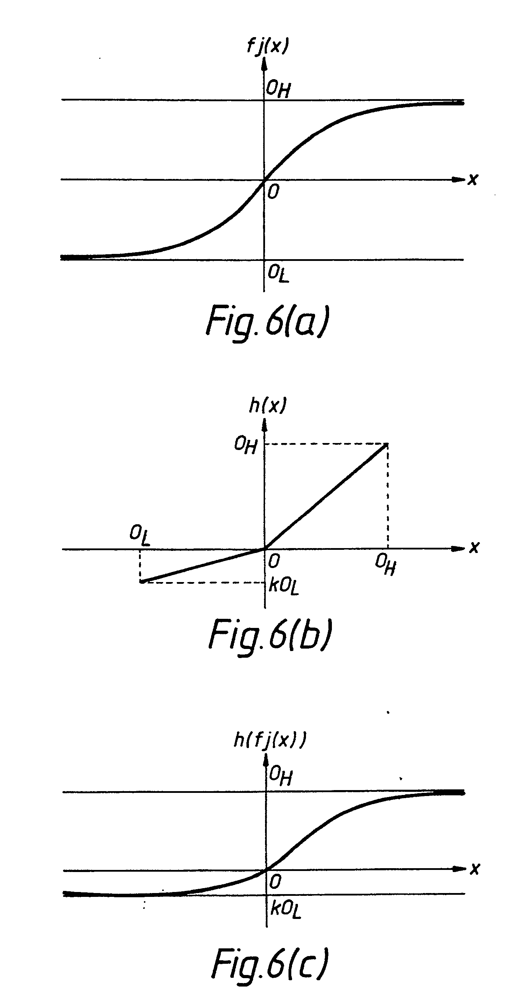

function $f_j$ is shown in Fig. 6(a).

As the effect of the artificial neurons generating negative output value is reduced more than the effect of the artificial neurons generating positive output value, function h is applied to $O_i^t$ of the right side of the formula (2).

$$O_j^{t+1} = fj \ (\Sigma W_{ji} h(O_i^{t})) \qquad (3)$$

$$h(x) = x \ .... \ X \geq 0$$

$$= kx \ .... \ X < 0 \ (0<k<1)$$

5

Function h is shown in Figure 6(b). By using the formula (3), the effect of the artificial neurons for generating negative output value is reduced k times. (The effect of the artificial neurons for generating positive output value is unchanged.) Therefore, the effect of the artificial neurons generating a negative output value is smaller than the effect of the artificial neurons generating a positive output value. If function h is applied to both sides of the formula (3), the formula (3) is represented as follows.

$$h(O_j^{t+1}) = h(f_j(\Sigma W_{ji}h(O_i^t))) \quad (4)$$

In the formula (4), $h(O_j^{t+1})$ and $h(f_j(x))$ are replaced as follows.

$$V_j^t = h(O_j^t)$$
$$g_j(x) = h(f_j(x))$$

Then, the formula (4) is represented as follows.

$$V_j^{t+1} = g_j(\Sigma W_{ji} V_i^t) \quad (5)$$

The formula (5) is of the same type as the Hopfield model formula (1), if the function $f_j$ and h are monotone increasing functions. Therefore, the formula (5) is equivalent to the Hopfield model. Figures 6(a) through 6(c) show the relation of the functions $f_j(x)$, $h(x)$ and $h(f_j(x))$. The function $f_j$ is "tanh" as shown in the Figure 6(a). The function h, which is shown Figure 6(b), is applied to the function $f_j$. The composite function $h(f_j(x))$ is shown in Figure 6(c). The present invention is explained below with regard to the neutral network in Figure 5. If the output values of the artificial neurons belonging to only one group are expected to be $O_H$ and the output values of the other artificial neurons belonging to the other groups are expected to be $O_L$, the neural network model is represented as follows.

N:  the number of all artificial neurons

n:  N artificial neurons are divided into groups of n artificial neurons.

p:  $p = n/N$

W:  the weight between the artificial neurons belonging to the same group (W>o)

w:  the weight between the artificial neurons belonging to different groups (w<o)

The following discussion assumes that the output value of the artificial neurons belonging to one group is $O_H(>0)$, the output value of the artificial neurons belonging to another group is unknown (o), the output value of the other artificial neurons belonging to the other groups is $O_L(<0)$. For the purpose of generating $O_L$ for the artificial neurons whose output value is unknown (o), the neural network must fulfill the condition as follows.

for the artificial neuron group whose output values are $O_H$:

$$net = (pN-1)WO_H + (1-2p)NwO_L>0 \quad (a)$$

for the artificial neuron groups whose output values are $O_L$:

$$net = (pN-1) WO_L + pNwO_H + (1-3p) NwO_L<0 \quad (b)$$

for the artificial neuron group whose output values are o:

$$net = pNwO_H + (1-2) NwO_L < O \quad (c)$$

The formula (a) is self-evident. From the formula (c),

$$p<1/3 \quad (d)$$

It is assumed that (pN>>1). By using the formula (d), from the formula (b),

$$O>\frac{w}{W}>\frac{1}{1/p-3} \quad (e)$$

or

or

$$\frac{w}{W}<\frac{1}{3-1/p} \quad \text{and} \quad O>\frac{O_L}{O_H}>-\frac{1}{1/p-3+\frac{W}{w}} \quad (f)$$

In case that number of artificial neurons whose output value is $O_H$ is under one third of number of all artificial neurons, it is necessary that the value of negative weight (w) is large (approaches "O") —— (e), or the minimum value of the output value ($O_L$) is large (approaches "O") —— (f).

In case that the value of "p" is small, the value of "$\frac{1}{1/p-3}$" of the formula (e) approaches "O". Accordingly, in prior art as ($|O_L| \simeq |O_H|$), the value of the $|w|$ must be very smaller than the value of $|W|$. But, if so, suppression of "w" is not efficacious and quality of association falls. On the other hand, if the value of $|O_L|$ is smaller than the value of $|O_H|$ as shown in the formula (f), the value of $|w|$ is nearly equal to the value of $|W|$.

In the same way, it the number of the artificial neurons generating the maximum value is expected to be larger than the number of artificial neurons generating the minimum value, the function is represented as follows.

$$h(x) = kx \dots X \geq 0 (0 < k < 1)$$
$$= x \dots X < 0$$

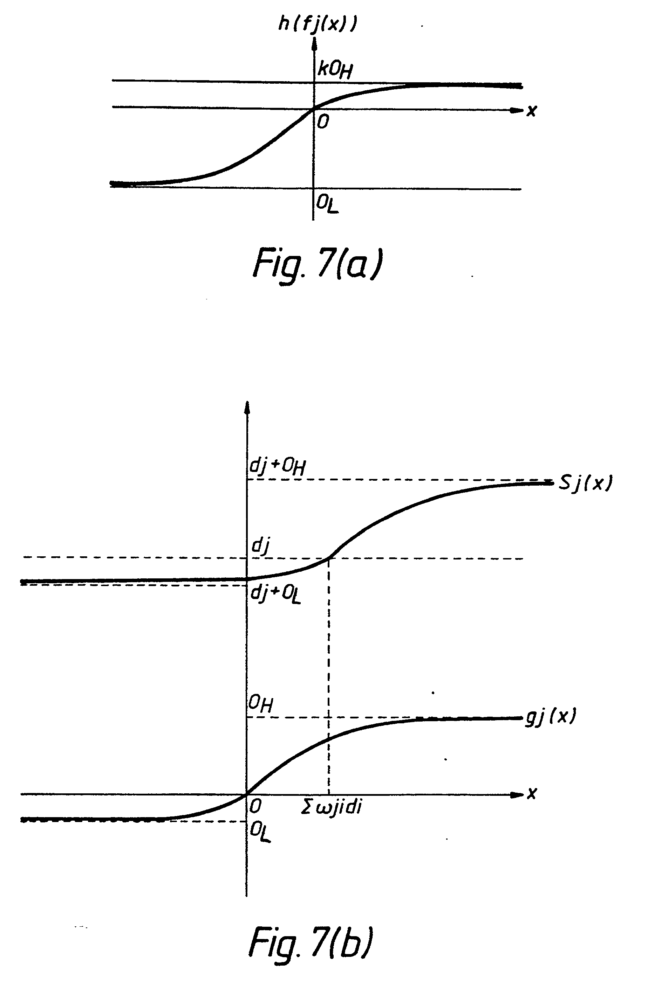

Figure 7(a) shows h(f(x)) according to the above function h(x).

If the constant $d_j$ is added to the variable Vj of the formula (5), the effect of the present invention is unchangeable. It assumes that the new output value added by the constant $d_j$ is $V_j$, input-output function of the artificial neuron j is $S_j$. In short

$$U_j = V_j + d_j$$
$$S_j(x) = g_j(x - \sum_i W_{ji}d_i) + d_j$$

The formula (5) is transformed as follows.

$$U_j^{t+1} - d_j = S_j(\sum_i W_{ji}(U_i^t - d_i) + \sum_i W_{ji}d_i) - d_j$$

$$U_j^{t+1} = S_j(\sum_i W_{ji}U_i^t) \qquad (6)$$

The formula (6) is of the same type as the Hopfield model. As shown in Figure 7(b), the function $S_j$ is equivalent to the function $g_j$ as

$$(\sum_i W_{ji}d_i, d_j)$$

is shifted downwards. If the function $g_j$ is a monotonic increment function, the function $S_j$ is a monotone increasing function. Therefore, the formula (6) is equivalent to the Hopfield model.

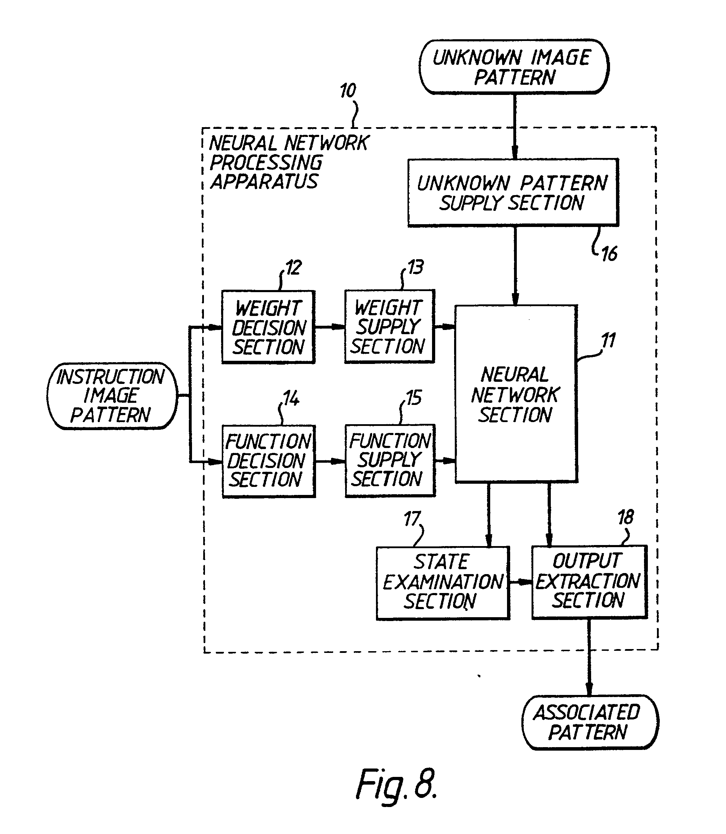

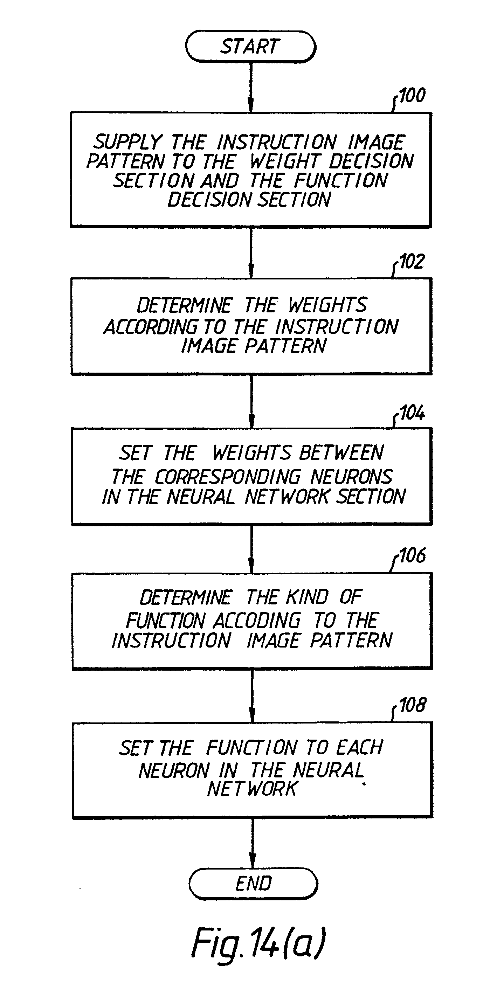

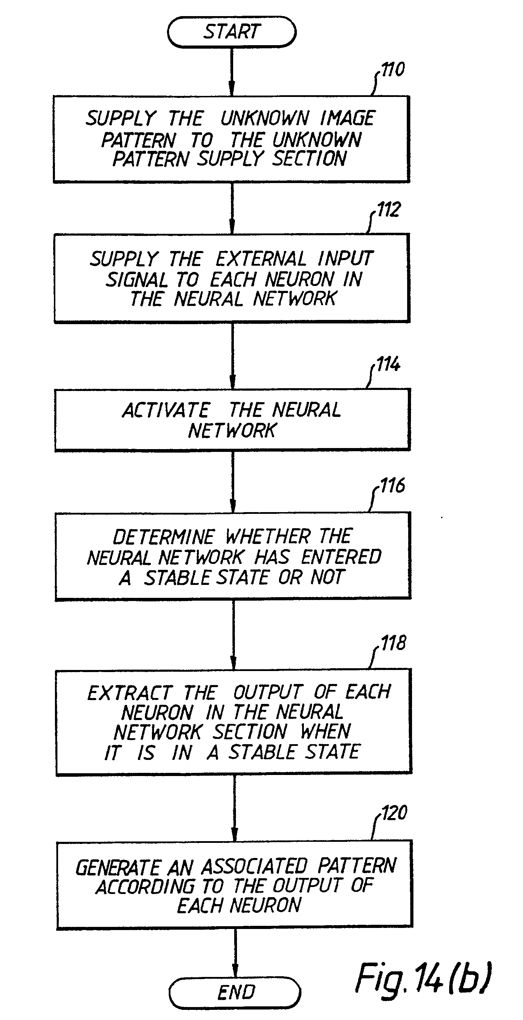

Figure 8 shows a block diagram of a neural network processing apparatus according to the present invention. In Figure 8, the neural network processing apparatus 10 comprises a neural network section 11, a weight decision section 12, a weight supply section 13, a function decision section 14, a function supply section 15, an unknown pattern supply section 16, a state examination section 17, and an output extraction section 18. The neural network section 11 corresponds to the neural network as shown in Figure 5. Sections 12 through 18 may be embodied in either hardware or in software executed by one or more processors (not shown). Figures 14(a) and 14(b) each show a flow chart describing processing by the system of Figure 8 according to the present invention.

At the beginning, the weight is not set between the artificial neurons in the neural network section 11. At initialization, the instruction image pattern is supplied to the weight decision section 12 and the function decision section 14 (Step 100 in Fig. 14(a)). The instruction image pattern is composed only of black pixels and white pixels. (The user wants to make the neural network processing apparatus memorize the pattern rule of the black pixels and the white pixels of the instruction image pattern.) The weight decision section 12 determines the weights according to the pattern of the black pixels and the white pixels (Step 102 in Fig. 14(a)). If two pixels have a tendency to be the same color (black or white), a positive weight is determined between the two pixels. If two pixels have a tendency to be different colors (black and white), a negative weight is determined between the two pixels. The absolute values of the weights are set as described above. The weight supply section 13 receives the weights from the weight decision section 12 and sets the weights between the corresponding artificial neurons in the neural network section 11 (Step 104 in Fig. 14(a)). The function decision section 14 determines the kind of function f according to the ratio of the number of the black pixels and the white pixels (Step 106 in Fig. 14(a)). If the number of the black pixels is smaller than the number of the white pixels, the function f as shown of Figure 6(c) is selected. If the number of the black pixels is larger than the number of the white pixels, the function f as shown of Figure 7(a) is selected. The function supply section 15 receives the function f from the function decision section 14 and sets the function in each artificial neuron in the neural network section 11 (Step 108 in Fig. 14(a)).

In execution mode, an unknown image pattern is supplied to the unknown pattern supply section 16 (Step 110 in Fig. 14(b)). The unknown image pattern is composed of black pixels, white pixels and unknown pixels. The unknown pattern supply section 16 supplies the external input signal to each artificial neuron in the neural network section 11 (one pixel is supplied to each artificial neuron) (Step 112 in Fig. 14(b)). For a black pixel, an external input "1" is supplied to a corresponding artificial neuron. For a white pixel, an external input "-1" is supplied to a corresponding artificial neuron. For an unknown pixel, an external input signal is not supplied to corresponding artificial neuron so the corresponding artificial neuron has an external input of "0." Or the value of all external input signals is "0", an initial value of output value of artificial neuron for a black pixel is "1" and an initial value of output value of artificial neuron for a white pixel is "0". Then the neural network is activated and each artificial neuron enters the input signal as a weighted sum of the other artificial neuron's output signal and the corresponding weight between the artificial neuron's to generate the output signal for that artificial neuron (Step 114 in Fig. 14(b)). The state examination section 17 determines whether the neural network has entered a stable state or not (Step 116 in Fig. 14(b)). If the output of each artificial neuron is substantially unchanging, the state examination section 17 decides that the neural network is in a stable state. Then the output extraction section 18 extracts the output of each artificial neuron in the neural network section 11 (Step 118 in Fig. 14(b)) and generates an associated pattern according to the output of each artificial neuron (Step 120 in Fig. 14(b)). The associated pattern is composed only of black pixels and white pixels, in which the unknown pixels are respectively considered as black pixels or white pixels.

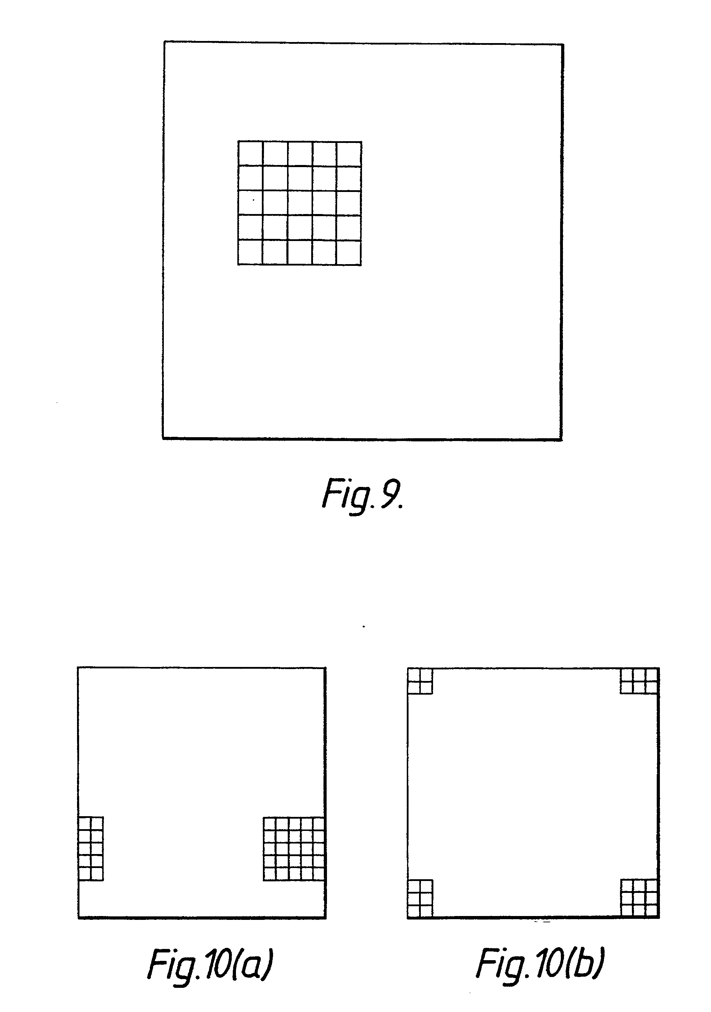

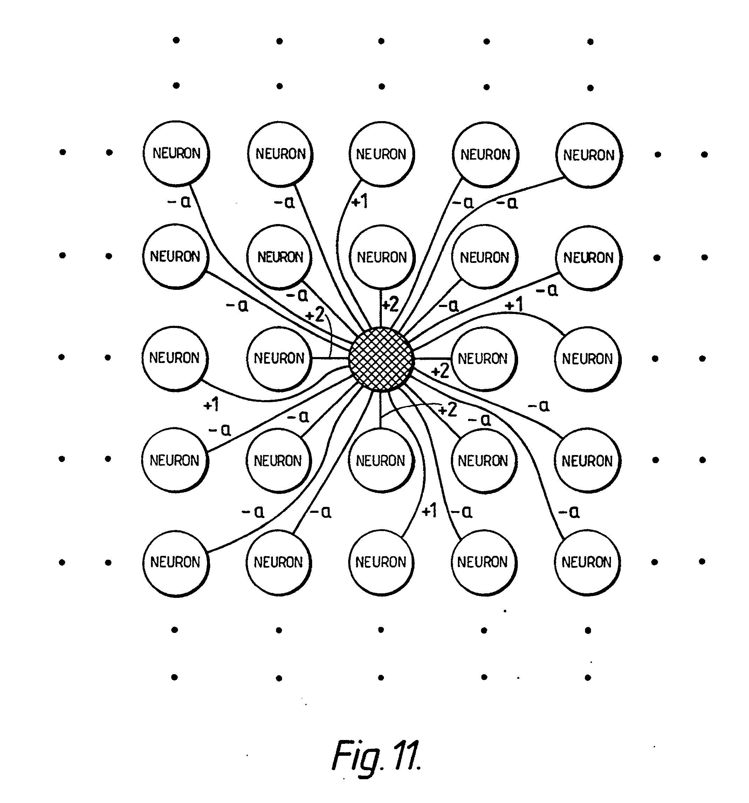

Next, a concrete example of the present invention is explained. The following discussion relates to 256 pixels (=16 x 16) of an image pattern. The image pattern is composed of 25 black pixels (=5 x 5) and the other white pixels as shown in figure 9. The 256 pixels are connected between the right edge and the left edge, the upper edge and the lower edge. Therefore, the protruded pixels for the right edge appear to the corresponding left edge as shown Figure 10(a). The protruded pixels from the lower edge appear to the corresponding upper edge as shown in Figure 10(b). In short, the relative position of the black pixels and white pixels on the image pattern is important. The neural network to associate to the image pattern is constructed as shown in Figure 11. Figure 11 shows the weight between a center-mesh artificial neuron and the other artificial neurons. For example, a weight "2" is set between the center-mesh artificial neuron and the neighboring top an bottom, right and left artificial neurons. A weight "1" is set between the center-mesh artificial neuron and the neighboring top and bottom, right and left separated one pixel from the center-mesh artificial neurons. A weight "-a" (a>o) is set between the center-mesh artificial neuron and the other artificial neurons. All artificial neurons are respectively regarded as the center-mesh artificial neuron for setting the weight. First, the association method of prior art is explained. The formula of the neural network is represented as follows.

$$O_j = \tanh (net_j)$$
$$net_j = \delta \Sigma W_{ji} O_i + (1-\delta) net_j \qquad (7)$$
$$(\delta = 0.1)$$

The purpose of the association method is to maintain a correct pattern. Therefore, if the image pattern shown in Figure 9 is supplied to the neural network, it is necessary for the correct pattern to be associated according to the formula (7). Here, to suppress sufficiently between two artificial neurons having a tendency to generate different expected output value, it is desirable that the absolute value of the negative weight ("-a") be equal to the absolute value of the positive weight "1" or "2". But if the absolute value of the negative weight "-a" is large, a neural network cannot associate correctly as the above-mentioned in the Background of the Invention section. Therefore, in conventional systems, first, an appropriate absolute value of the negative weight "-a" should be calculated. It is assumed that the output value of the artificial neuron corresponding to the black pixel is "1" and the output value of the artificial neuron coresponding to white pixel is "-1", and

$$\tanh (2) = 0.96$$

Therefore, as for net j of the artificial neuron corresponding to the black pixel,

$$net_j \geq 2$$

As for net j of the artificial neuron corresponding to the white pixel,

$$net_j \leq -2$$

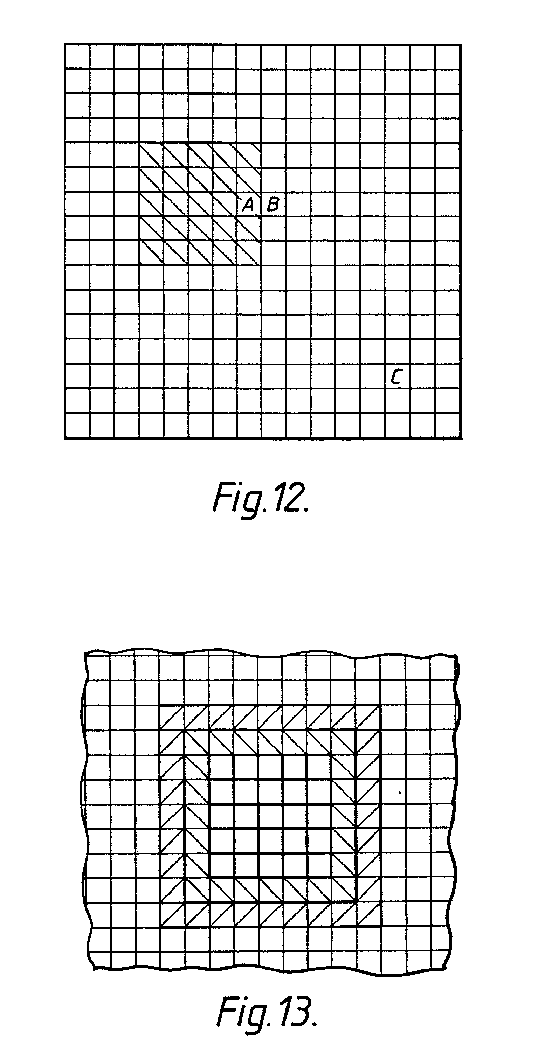

For the purpose of discussion, three points "A", "B", "C" are selected as shown in Figure 12. As for point "A",

$$net_j = 6 + 211 a \geq 2$$
$$a \geq -0.02$$

As for point "B",

$$netj = -6 + 201\,a \leq -2$$
$$a \leq 0.02$$

As for point "C",

$$netj = -12 + 197\,a \leq -2$$
$$a \leq 0.05$$

$$\therefore \quad 0 < a \leq 0.02 \qquad (a>0)$$

Weights of -a are shown in Figure 11. Accordingly, it is assumed that "a =0.01." Because as the value of "a," the center value within the above-limits seems to be adequate. ("-a" is a weight between the center mesh artificial neuron and the other artificial neurons except the neighboring top and bottom, right and left two consecutive artificial neurons.) It is determined whether the correct pattern is associated by the noise added pattern or not. The e % noise is defined as selecting e % pixels from 256 pixels and inverting black/white of e % pixels. As an initial value of the noise added pattern, the external input value of the artificial neuron corresponding to the black pixel is "1", and the external input value of the artificial neuron corresponding to the white pixel is "-1". The test result of 100 times for each noise is shown below:

| association degree noise % | perfect match | partial match 1 | partial match 2 |
|---|---|---|---|
| 10 | 70 | 28 | 2 |
| 15 | 49 | 48 | 3 |
| 20 | 38 | 55 | 7 |

As shown in Figure 13, it is assumed that the correct image pattern (answer) is fixed at 25 black pixels (=5 x 5). If the associated pattern is 25 black pixels corresponding to the correct image pattern, it is defined as a perfect match. If the associated pattern (black pixels) is not perfectly matched with the correct image pattern and is inside the region enclosed by ⎡X⎦

, it is defined as partial match 1. If the associated pattern is not a perfect match or a partial match 1, and if the associated pattern is inside the region enclosed by ⎡/⎦

, it is defined as partial match 2.

Next, the association method of the present invention is explained for the same problem. The formula of the neural network of the present invention is represented as follows.

$$O_j = \tanh(net_j) \quad \ldots\ldots \quad net_j \geq 0$$
$$= k\tanh(net_j) \quad \ldots\ldots \quad net_j < 0$$
$$(0<k<1)$$

$$net_j = \delta \sum_i W_{ji} O_i + (1-\delta)\, net_j \qquad (\delta = 0.1)$$

As the same way of above mentioned example, the example examines three points "A", "B", and "C" to determine the appropriate value of "k". Here, it is assumed that "a=1", because the present invention controls function of each artificial neuron according to the ratio of the number of the artificial neurons expected to generate a maximum output value and a minimum output value. Therefore, even if the absolute value of the negative weight "-a" is equal to the absolute value of the positive weight "1", a neural network can associate correctly as the above-mentioned.

As for point "A",

$$netj = -12 + 229 k \geqq 2$$
$$k \geqq 0.06$$

As for point "B",

$$netj = -20 + 224 k \leqq -2$$
$$k \leqq 0.08$$

As for point "C",

$$netj = -25 + 210 k \leqq -2$$
$$k \leqq 0.11$$

As for point "C",

$$netj = -25 + 210 \ k \leq -2$$

$$k \leq 0.11$$

$$\therefore \ \ 0.06 \leq k \leq 0.08$$

k is the ratio of the effect of the output value of the artificial neuron generating negative output value to the effect of the output value of the artificial neuron generating positive output value. This discussion assumes that "k=0.07". Because, as the value of "k", the center value within the above-limits seems to be adequate. It is determined wheter the correct image pattern is associated by the noise added pattern or not. As an initial value of the noise added pattern, the external input value of the artificial neuron corresponding to the black pixel is "1" and the external input value of the artificial neuron corresponding to the white pixel is "-1". The test result of 100-times for each noise is shown as follows.

| association degree noise % | perfect match | partial match 1 | partial match 2 |
|---|---|---|---|
| 10 | 100 | 0 | 0 |
| 15 | 93 | 7 | 0 |
| 20 | 79 | 21 | 0 |

After comparing the examination results of the present invention and the prior art, it is clear that the present invention is superior to the prior art.

## Claims

1. A neural network processing apparatus, having a plurality of artificial neurons for generating an output signal by applying a predetermined function f to an input signal and network means (11, 12, 13) for interconnecting the artificial neurons and for setting a weight between each of the artificial neurons according to a predetermined connection relationship between the artificial neurons characterised by:

function setting means (14, 15) for setting the function f, which is defined as (f(x)>f(-x)) for a positive value x of the input signal, for each artificial neuron if the number of the artificial neurons generating the maximum output value is expected to be smaller than the number of the artificial neurons generating the minimum output value; and

activator means (17, 18) for activating the network means (1) so that each artificial neuron enters

EP 0 450 890 A2

an input signal from the output of another artificial neuron as a weighted sum of the other artificial neuron's output signal and a corresponding weight between the artificial neurons, and generates the output signal.

2. A neural network processing apparatus, having a plurality of artificial neurons for generating an output signal by applying a predetermined function f to an input signal and network means (11, 12, 13) for interconnecting the artificial neurons and for setting a weight between each of the artificial neurons according to a predetermined connection relationship between the artificial neurons, characterised by:

function setting means (14, 15) for setting the function f, which is defined as (f(x)<-f(-x) for a positive value x of the input signal, for each artificial neuron if the number of the artificial neurons generating the maximum output value is expected to be larger than the number of the artificial neurons generating the minimum output value; and

activator means (17, 18) for activating the network means (1) so that each artificial neuron enters an input signal from the output of another artificial neuron as a weighted sum of the other artificial neuron's output signal and corresponding weighting value between the artificial neurons, and generates an output signal.

3. A neural network processing apparatus according to claim 1 or claim 2, wherein each artificial neuron determines the output signal value by applying the function f to the input signal and an external input signal.

4. A neural network processing apparatus according to claim 3, wherein the number of artificial neurons is the same as the number of pixels of an instruction image pattern, and the artificial neurons respectively correspond to the pixels.

5. A neural network processing apparatus according to claim 4 wherein the external input signal is the pixel value of an unknown image pattern and is supplied to the artificial neuron corresponding to the pixel.

6. A neural network processing apparatus according to claim 4, wherein the initial output value is the pixel value of an unknown image pattern and is supplied to the artificial neuron corresponding to the pixel.

7. A neural network processing apparatus according to claim 5, wherein the activator means (17, 18) decides that the plurality of artificial neurons are in a stable state when the output values of the artificial neurons are unchanging respectively near to the maximum value or the minimum value.

8. A neural network processing apparatus according to claim 7, wherein the activator means (17, 18) identifies the unknown image pattern according to the output values of the artificial neurons when the artificial neurons are in the stable state.

9. A neural network processing apparatus according to claim 1 or claim 2, wherein the function setting means (14, 15) expects the number of the artificial neurons generating the maximum output value and the minimum output value according to numbers of black pixels and white pixels of the instruction image pattern.

10. A neural network processing apparatus according to claim 1 or claim 2, wherein the network means (12) determines the strength of connection between each of each of the artificial neurons according to the position of the black pixels and the white pixels of the instruction image pattern.

11. A neural network processing apparatus according to claim 1 or claim 2, wherein the function setting means (14, 15) sets the function g, which is the function f moved in parallel to at least one of the X axis and Y axis on an X-Y coordinate plane.

12. A method of processing performed by a neural network system having a plurality of artificial neurons for generating an output signal by applying a selected function f to an input signal, the artificial neurons mutually interconnected, the method comprising the steps of:

setting a weight between each of the artificial neurons according to a strength of the connection between the artificial neurons, characterised in that;

setting the function f, which is defined as (f(x)>-f(x)) for a positive value x of the input signal, for each artificial neuron if the number of the artificial neurons generating the maximum output value is expected to be smaller than the number of the artificial neurons generating the minimum output value; and

activating the artificial neurons so that each artificial neuron enters an input signal as a weighted

11

sum of the other artificial neuron's output signal and a corresponding weight between the artificial neurons, and generates the output signal.

13. A method of processing performed by a neural network system having a plurality of artificial neurons for generating an output signal by applying a selected function f to an input signal, the artificial neurons being mutually interconnected, the method comprising the steps of:

setting a weight between each of the artificial neurons according to a strength of the connection between the artificial neurons, characterised in that;

setting the function f, which is defined as $(f(x)>-f(-x))$ for a positive value x of the input signal, for each artificial neuron if the number of the artificial neurons generating the maximum output value is expected to be larger than the number of the artificial neurons generating the minimum output value; and

activating the artificial neurons so that each artificial neuron enters an input signal as a weighted sum of the other artificial neuron's output signal and a corresponding weight between the artificial neurons, and generates the output signal.

Fig. 1.

PATTERN 0

PATTERN 1

PATTERN 2

PATTERN 3

PATTERN 4

PATTERN 5

Fig. 2.

Fig. 3.

Fig. 4(a)

Fig. 4(b)

Fig. 5.

Fig. 6(a)

Fig. 6(b)

Fig. 6(c)

$h(fj(x))$

$kO_H$

$O$

$x$

$O_L$

Fig. 7(a)

$Sj(x)$

$dj+O_H$

$dj$

$dj+O_L$

$O_H$

$gj(x)$

$O$

$\Sigma \omega jidi$

$x$

$O_L$

Fig. 7(b)

Fig. 8.

Fig.9.

Fig.10(a)

Fig.10(b)

Fig. 11.

Fig.12.

Fig.13.

START

┌─ 100
SUPPLY THE INSTRUCTION IMAGE
PATTERN TO THE WEIGHT DECISION
SECTION AND THE FUNCTION
DECISION SECTION

┌─ 102
DETERMINE THE WEIGHTS
ACCORDING TO THE INSTRUCTION
IMAGE PATTERN

┌─ 104
SET THE WEIGHTS BETWEEN
THE CORRESPONDING NEURONS
IN THE NEURAL NETWORK SECTION

┌─ 106
DETERMINE THE KIND OF
FUNCTION ACCODING TO THE
INSTRUCTION IMAGE PATTERN

┌─ 108
SET THE FUNCTION TO EACH
NEURON IN THE NEURAL
NETWORK

END

Fig.14(a)

START

110

SUPPLY THE UNKNOWN IMAGE
PATTERN TO THE UNKNOWN
PATTERN SUPPLY SECTION

112

SUPPLY THE EXTERNAL INPUT
SIGNAL TO EACH NEURON IN
THE NEURAL NETWORK

114

ACTIVATE THE NEURAL
NETWORK

116

DETERMINE WHETHER THE
NEURAL NETWORK HAS ENTERED
A STABLE STATE OR NOT

118

EXTRACT THE OUTPUT OF EACH
NEURON IN THE NEURAL
NETWORK SECTION WHEN
IT IS IN A STABLE STATE

120

GENERATE AN ASSOCIATED PATTERN
ACCORDING TO THE OUTPUT OF
EACH NEURON

END

Fig. 14(b)